# FASCICULE DE BREVET EUROPEEN

(11) **EP 1 508 479 B1**
(45) Date de publication et mention de la délivrance du brevet: **11.01.2006**
(21) Numéro de dépôt: 04291910.0
(22) Date de dépôt: 27.07.2004
(51) Int. Cl.: B60R 13/02, B60R 21/20

(54) **Pièce d'habilage pour vèhicule automobile, avec un volet apte à masquer un coussin gonflable**
Verkleidungsteil für ein Fahrzeug mit einer Klappe zum Verdecken eines Airbags
Trim part for a vehicle with a flap for covering an airbag

(30) Priorité: 22.08.2003 FR 0310111
(43) Date de publication de la demande: 23.02.2005
(73) Titulaire: MÖLLERTECH SAS, 91370 Verrières le Buisson (FR)
(72) Inventeur: Chaussset Fracois, 36250 Saint Maur (FR)
(74) Mandataire: Thinat, Michel

(56) Documents cités:
- FR-A- 2 792 271
- US-A1- 2001 023 011
- US-A1- 2001 038 195

## Description

L'invention concerne en général les habillages pour véhicules automobiles.

Plus précisément, l'invention concerne, selon un premier aspect, une pièce d'habillage pour véhicule automobile équipé d'un coussin gonflable, comprenant un cadre rigide présentant une ouverture située devant le coussin gonflable et un volet obturant l'ouverture.

Des habillages de ce type sont connus de l'art antérieur, et notamment du document de brevet EP 1 167 131 qui décrit un volet monté sur le cadre par une articulation permettant au volet de pivoter quand le coussin se déploie. Ce type de montage est mécaniquement complexe, et entraîne des surcoûts de fabrication.

Le brevet US 5,427,409 révèle un volet fixé sur son support par des languettes venues de matière qui se rompent quand le coussin se déploie. La réalisation de pièces avec de telles languettes est délicate.

FR-A-2 792 271 montre une pièce d'ahbillage intérieur avec un medaillon et un volet formés en une pièce. La couche de matière plastique du volet ne s'étend pas sur le rebord périphérique du volet.

Dans ce contexte, l'invention vise à pallier les défauts mentionnés ci-dessus et à proposer un garnissage de constitution particulièrement simple.

A cette fin, la pièce d'habillage de l'invention, par ailleurs conforme à la définition générique qu'en donne le préambule ci-dessus, est caractérisée en ce que qu'elle comprend un médaillon à contour fermé entourant l'ouverture et fixé rigidement sur le cadre, le volet étant lié au cadre par un rebord périphérique pincé entre le médaillon et le cadre, le volet comprenant une couche de matière plastique d'une souplesse appropriée s'étendant au moins sur le rebord périphérique et un revêtement souple surmoulé sur la couche de matière plastique.

Dans un mode de réalisation possible de l'invention, le revêtement comprend une zone de retenue non surmoulée sur la couche de matière plastique et rigidement fixée à un point fixe, par exemple le cadre ou le médaillon, constituant une sangle de retenue du volet quand le coussin se gonfle.

La pièce selon l'invention peut également avantageusement présenter une ou plusieurs des caractéristiques suivantes :
- La zone de retenue du revêtement forme normalement plusieurs plis disposés dans un logement formé entre le cadre et le médaillon, ces plis se déployant quand le coussin se gonfle.
- La zone de retenue fait saillie par rapport à un bord de la couche de matière plastique, cette zone présentant une forme allongée parallèlement audit bord.
- Le médaillon comprend des pattes de fixation engagées de manière irréversible dans des orifices de fixation du cadre et maintenant l'écartement entre le médaillon et le cadre constant.
- La zone de retenue porte des trous de retenue que les pattes de fixation traversent avant de s'engager dans les orifices de fixation.
- Le revêtement est un tissu non déchirable, du type à chaîne et trame ou jersey.
- La matière plastique formant la couche est constituée de polypropylène chargé d'une matière élastique, par exemple de l'éthylène propylène diène (EPDM).
- L'ouverture présente des bords inclinés formant des avaloirs pour guider le déploiement du coussin gonflable.

Selon un second aspect, l'invention vise l'application de la pièce présentant les caractéristiques ci-dessus à la constitution d'un garnissage de porte latérale de véhicule automobile dans laquelle est logé un coussin gonflable.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue de face d'une porte latérale de véhicule automobile équipée d'une pièce de garnissage selon l'invention,
- la figure 2 est une vue en coupe verticale de la porte de la figure 1, considérée sous l'incidence des flèches II de la figure 1, le coussin gonflable étant représenté à l'état replié,
- la figure 3 est une vue similaire à celle de la figure 2, le coussin gonflable étant représenté en cours de déploiement et le volet étant représenté éjecté par le coussin,
- les figures 4 et 5 sont des vues agrandies, respectivement de détails IV et V de la figure 2,
- la figure 6 est une vue en coupe verticale de la porte de la figure 1, considérée sous l'incidence des flèches VI de la figure 1,
- la figure 7 est une vue en coupe longitudinale de la porte de la figure 1, considérée sous l'incidence des flèches VII de la figure 1,
- la figure 8 est une vue similaire à celle de la figure 1, le volet n'étant pas représenté pour laisser apparaître l'ouverture du cadre, et
- la figure 9 est une vue de face du volet de la figure 1.

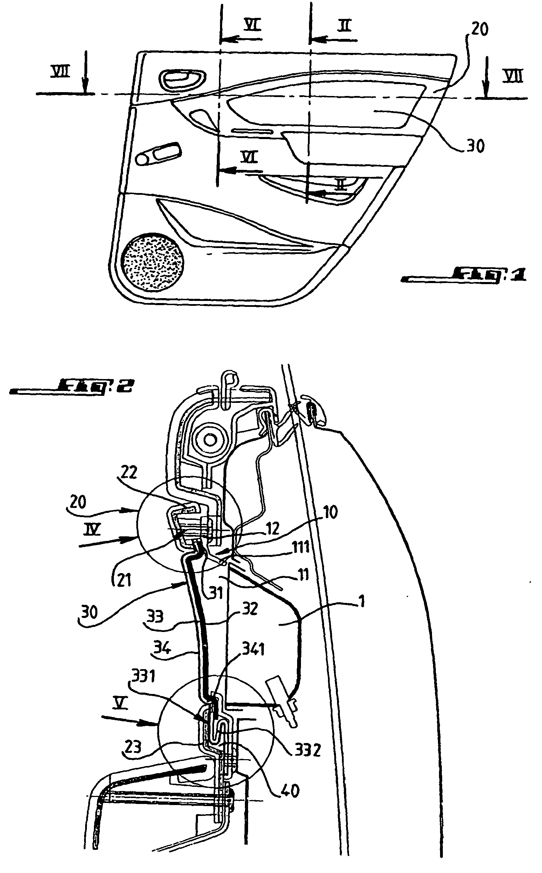

Les figures 1 et 2 représentent la partie inférieure d'une porte latérale de véhicule automobile, revêtue d'un côté intérieur par une pièce d'habillage.

Un coussin gonflable 1 est disposé à l'intérieur de la porte. Il est normalement à l'état replié et se déploie, dans des conditions prédéterminées, quand le véhicule subit un choc.

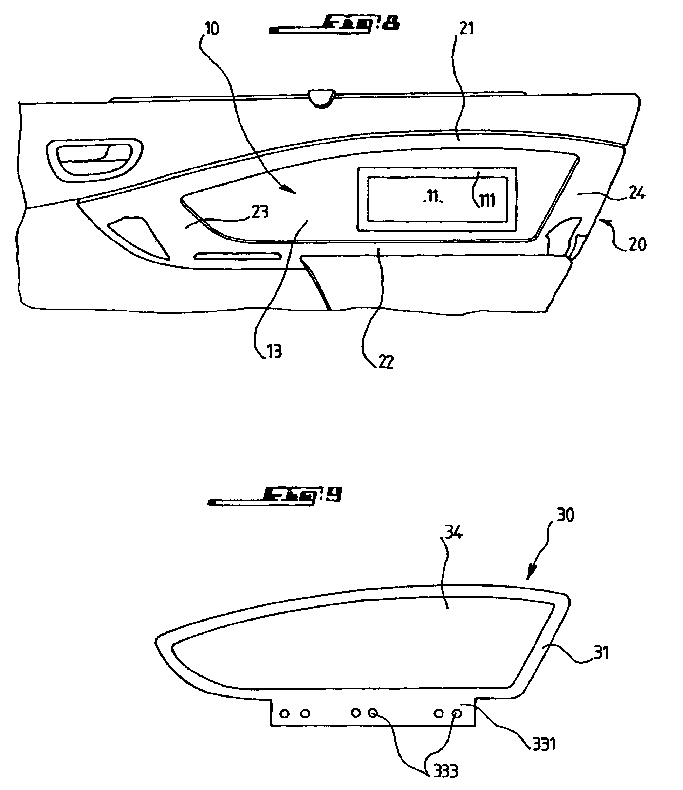

On voit sur les figures 2 et 8 que la pièce d'habillage comprend un cadre rigide 10 présentant une ouverture 11 située devant le coussin gonflable 1 et un volet 30 obturant l'ouverture 11 tant que le coussin 1 reste à l'état replié.

En cas de choc, le coussin 1 se déploie à l'intérieur du véhicule à travers l'ouverture 11, le volet 30 étant éjecté par la pression exercée par le coussin 1.

Le cadre 10 est rigidement fixé sur une pièce de structure de la porte du véhicule. Son ouverture 11 présente une forme rectangulaire, comme le montre la figure 8, de grand côté longitudinal et de petit côté vertical.

Selon l'invention, la pièce d'habillage comprend un médaillon à contour fermé 20 entourant l'ouverture 11 et fixé rigidement sur le cadre 10, le volet 30 étant lié au cadre 10 par un rebord périphérique 31 pincé entre le médaillon 20 et le cadre 10.

Le volet 30 comprend lui-même une couche de matière plastique 32 et un revêtement souple 33 surmoulé sur la couche de matière plastique 32. La couche de matière plastique s'étend au moins sur le rebord périphérique 31, et s'étend généralement sur toute la surface du volet.

Le revêtement 33 assure, entre autres, une fonction décorative et est tourné vers l'intérieur du véhicule. La couche de matière plastique 32 confère sa forme au volet et sert de support pour le revêtement, mais, comme on le verra plus loin, possède également une élasticité appropriée suffisante pour que le rebord périphérique 31 puisse glisser et se dégager du médaillon 20 sous la pression du coussin 1 quand celui-ci se gonfle.

Selon une autre caractéristique particulièrement importante de l'invention, le revêtement 33 comprend une zone de retenue 331 non surmoulée sur la couche de matière plastique 32 et rigidement fixée à un point fixe. Cette zone constitue une sangle de retenue du volet 30 quand le coussin se gonfle, de telle sorte que le volet 30 ne peut pas devenir un projectile et blesser les occupants du véhicule.

La matière plastique formant la couche 32 est constituée de polypropylène chargé d'une matière élastique, par exemple de l'éthylène propylène diène terpolymère (EPDM).

Cette matière permet de concilier les contraintes de souplesse, pour permettre le dégagement et l'éjection du volet 30, et de résistance mécanique du volet 30.

Le revêtement 33 doit concilier une fonction décorative avec un impératif de résistance mécanique en traction, pour retenir le volet 30 quand le coussin 1 se déploie.

Ce revêtement est typiquement un tissu non déchirable, comprenant une couche conférant l'apparence recherchée au tissu, montée sur une trame conférant sa résistance au tissu.

Les tissus du type à chaîne et trame ou jersey conviennent bien pour constituer le volet 30.

La nature exacte du tissu et de la matière plastique, l'épaisseur de la couche de matière plastique 32 et les caractéristiques techniques détaillées du tissu sont déterminées par calculs, éventuellement suivis d'essais en conditions représentatives, en fonction de la taille et de la forme spatiale du volet, des caractéristiques géométriques du médaillon, et du type de coussin gonflable 1, en particulier de la pression exercée sur le volet quand le coussin se déploie et de l'énergie avec laquelle le volet est éjectée.

Le revêtement 33 est surmoulé sur la couche de matière plastique 32, par exemple en utilisant la technique dite d'injection basse pression, décrite dans le document de brevet FR 2 702 990. Selon cette technique, le revêtement est introduit dans la cavité d'un moule, le moule est refermé et la matière plastique est injectée à l'état fondu sous une basse pression d'un côté du revêtement. Sous la pression de la matière plastique fondue, le revêtement est plaqué contre une paroi du moule. Après solidification de la matière plastique, la pièce est éjectée du moule.

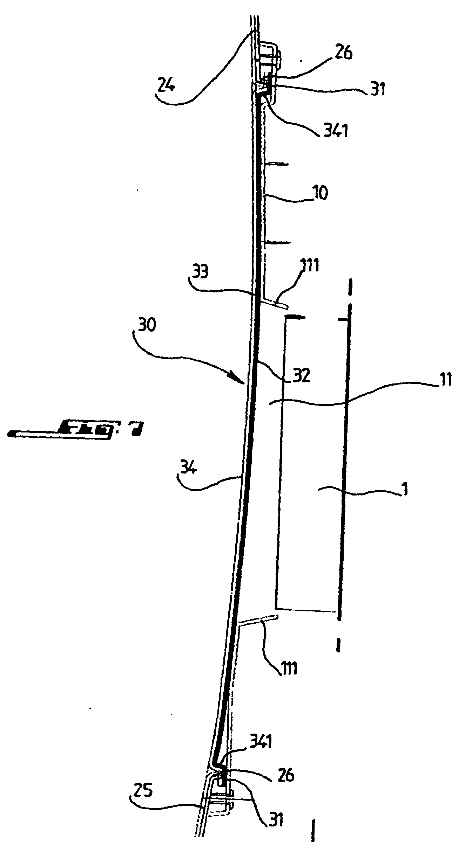

Comme le montrent les figures 6 à 8, le cadre 10 est une plaque mince, comprenant une partie centrale sensiblement plane 13 dans laquelle l'ouverture 11 est découpée.

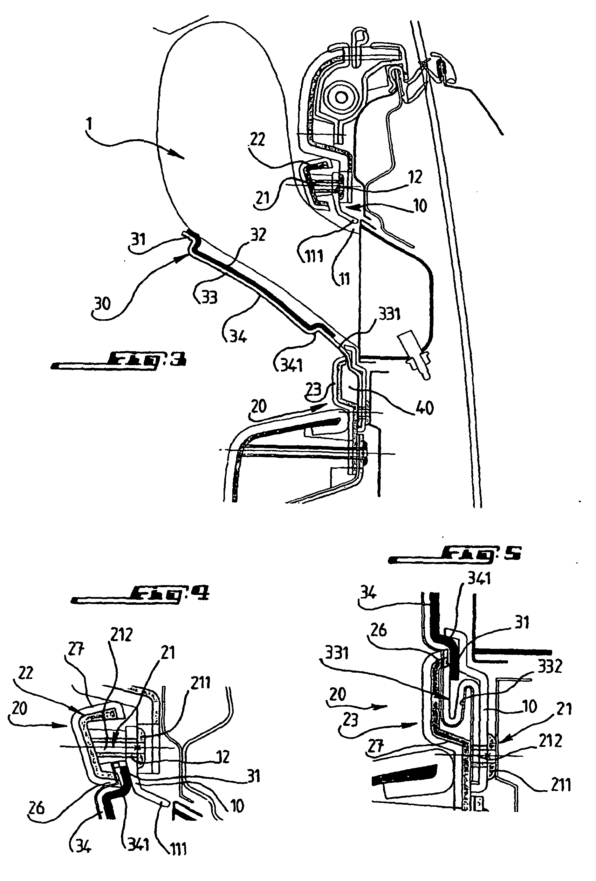

On voit sur les figures 3 et 7 que l'ouverture 11 présente des bords 111 inclinés formant des avaloirs pour guider le déploiement du coussin gonflable 1. Ces bords inclinés 111 se dressent sur une face du cadre opposée à l'intérieur du véhicule, c'est-à-dire vers le coussin gonflable 1, et sont inclinés vers le centre de l'ouverture 11.

Le cadre 10 est réalisé en matière plastique, par injection dans un moule.

Le médaillon 20 entoure l'ouverture 11, à distance des bords inclinés 111, comme le montre la figure 8. Il comprend des bras supérieur et inférieur 22 et 23 mutuellement opposés, réunis par des bras avant et arrière 24 et 25, tous venus de matière, ces quatre bras délimitant un vide central de forme allongée dans une direction longitudinale.

Chaque bras présente une section concave en forme de U, de concavité tournée vers le cadre 10. La branche intérieure 26 du U, située du côté du vide central du médaillon 20, est relativement plus courte que la branche 27 située d'un côté extérieur du médaillon 20.

Le rebord périphérique 31 du volet 30 est pincé sur toute sa longueur, entre la branche intérieure 26 et la partie centrale 13 du cadre 10, sur une largeur faible relativement aux dimensions totales du volet 30.

Le vide central du médaillon 20 est délimité par les branches intérieures 26 respectives des quatre bras supérieur, inférieur, avant et arrière 22 à 25.

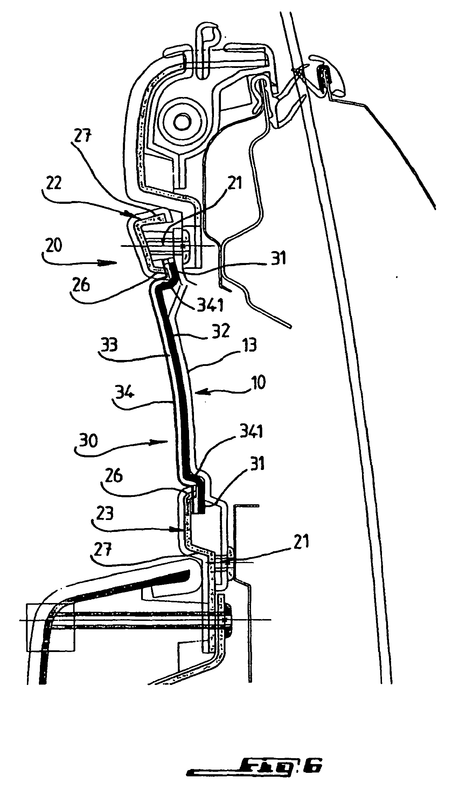

Le médaillon 20 comprend des pattes de fixation 21 rigides, venues de matière avec les bras 22 à 25, engagées de manière irréversible dans des orifices de fixation 12 du cadre 10. Un premier type de patte 21 est représenté sur la figure 4 et comprend une tige 212 s'étendant à partir du médaillon 20 vers le cadre 10 et engagée dans les orifices de fixation 12, et une tête 211 solidaire d'une extrémité de la tige 212. Des nervures s'étendent le long de la tige 212 jusqu'à l'orifice 12. La tête et les nervures sont situées respectivement d'un premier côté du cadre 10 tourné vers le coussin gonflable et d'un second côté opposé au premier, de telle sorte que les bords de l'orifice de fixation 12 sont pincés entre la tête 211 et des extrémités des nervures.

Un second type de patte 21 est représenté sur la figure 5 et comprend une tige 212 s'étendant à partir du bras inférieur 23 du médaillon 20 vers l'orifice de fixation 12 et engagée dans cet orifice de fixation 12, et une tête 211 prolongeant la tige et disposée d'un côté du cadre 10 tourné vers le coussin 1. La tige est courte, de telle sorte que les bords de l'orifice de fixation 12 sont pincés entre la tête 211 et le bras du médaillon auquel la tige est fixée.

Le médaillon 20 comprend plusieurs pattes de l'un ou l'autre type, réparties le long de ses quatre bras.

Ces pattes permettent de maintenir un écartement constant entre le médaillon 20 et le cadre 10 et donc de bien contrôler la force avec laquelle le volet 30 est pincé entre le médaillon 20 et le cadre 10.

Le médaillon 20 est réalisé en matière plastique, par injection dans un moule.

Le volet 30 présente une forme allongée dans le sens longitudinal. Considéré en coupe, comme sur les figures 6 et 7, on voit qu'il comprend une plaque centrale 34 plane, s'étendant parallèlement et au contact de la partie centrale 13 du cadre 10, entourée d'un bord dressé 341 faisant saillie vers le coussin gonflable 1. Le rebord périphérique 31 prolonge le bord dressé 341 vers l'extérieur du volet, parallèlement à la plaque centrale 34. La plaque centrale 34 présente une forme correspondant exactement à celle du vide central du médaillon 20. Comme le montre la figure 4, la branche intérieure 26 prend appui à l'angle entre le bord dressé 341 et le rebord périphérique 31.

La couche de matière plastique 32 couvre généralement à la fois la plaque centrale 34, le bord dressé 341 et le rebord périphérique 31.

Comme le montre la figure 9, la zone de retenue 331 du revêtement 33 fait saillie par rapport à un bord de la couche de matière plastique 32, cette zone présentant une forme rectangulaire allongée parallèlement audit bord.

Ledit bord constitue une partie du bord périphérique 31 située du côté du bras inférieur 23 du médaillon 20 quand le volet 30 est en place.

La zone de retenue 331 porte trois paires de deux trous de retenue 333 que les pattes de fixation 21 du médaillon 20 traversent avant de s'engager dans les orifices de fixation 12 du cadre 10.

Les trois paires de trous 333 sont régulièrement espacées le long de la zone de retenue 331, aux deux extrémités et au centre de celle-ci. Les deux trous 333 d'une même paire sont disposés à faible distance l'un de l'autre relativement à la distance séparant les paires.

On voit sur les figures 2 et 5 que, quand le volet 30 est en place sur le médaillon 20, la zone de retenue 331 du revêtement 33 forme plusieurs plis 332 entre les trous de retenues 333 et le bord périphérique 31. Ces plis sont disposés dans un logement 40 formé entre le cadre 10 et le bras inférieur 23 du médaillon 20.

Ces plis 332 se déploient quand le coussin 1 se gonfle, comme le montre la figure 3. La présence de ces plis 332 permet à la partie du bord périphérique 31 bordée par la zone de retenue 331 de se dégager du médaillon 20.

On voit sur la figure 5 que le logement 40 correspond à l'espace intérieur du U formé par le bras inférieur 23.

On notera que, dans une variante de réalisation non représentée, la zone de retenue 331 peut être rigidement fixée, non sur le cadre 10 ou le médaillon 20, mais sur un point fixe de la porte, par exemple une pièce de structure.

La pièce d'habillage décrite ci-dessus est parfaitement adaptée à la constitution d'une porte de véhicule automobile dans laquelle est logé un coussin gonflable. Elle peut tout aussi bien être utilisée pour dissimuler un coussin gonflable logé dans la planche de bord ou au centre du volant.

On comprend bien que la pièce d'habillage de l'invention est particulièrement simple et facile de montage. Elle ne comprend que trois éléments. La sangle de retenue, qui est en général un élément distinct du volet et peut être délicate à monter, est constituée très simplement par une partie du revêtement du volet. Le volet est maintenu en position sur le cadre devant l'ouverture, par simple pincement de son rebord périphérique entre le médaillon et le cadre. Il n'est donc pas lié au cadre par des moyens complexes tels que des charnières.

Par ailleurs, la pièce d'habillage est peu coûteuse et peut être pré-assemblée chez le fournisseur puis montée d'une pièce sur le véhicule automobile.

## Revendications

1. Pièce d'habillage intérieur pour véhicule automobile équipé d'un coussin gonflable (1), comprenant un cadre rigide (10) présentant une ouverture (11) située devant le coussin gonflable (1) et un volet (30) obturant l'ouverture (11), **caractérisé en ce qu'**elle comprend un médaillon (20) à contour fermé entourant l'ouverture (11) et fixé rigidement sur le cadre (10), le volet (30) étant lié au cadre (10) par un rebord périphérique (31) pincé entre le médaillon (20) et le cadre (10), le volet (30) comprenant une couche de matière plastique (32) d'une souplesse appropriée s'étendant au moins sur le rebord périphérique (31) et un revêtement (33) souple surmoulé sur la couche de matière plastique (32) .

2. Pièce selon la revendication 1, **caractérisée en ce que** le revêtement (33) comprend une zone de retenue (331) non surmoulée sur la couche de matière plastique (32) et rigidement fixée à un point fixe, par exemple le cadre (10) ou le médaillon (20), constituant une sangle de retenue du volet (30) quand le coussin (1) se gonfle.

3. Pièce selon la revendication 2, **caractérisée en ce que** la zone de retenue (331) du revêtement (33) forme normalement plusieurs plis (332) disposés dans un logement (40) formé entre le cadre (10) et le médaillon (20), ces plis se déployant quand le coussin (1) se gonfle.

4. Pièce selon la revendication 2 ou 3, **caractérisée en ce que** la zone de retenue (331) fait saillie par rapport à un bord de la couche de matière plastique (32), cette zone présentant une forme allongée parallèlement audit bord.

5. Pièce selon l'une quelconque des revendications 2 à 4, **caractérisée en ce que** le médaillon (20) comprend des pattes de fixation (21) engagées de manière irréversible dans des orifices de fixation (12) du cadre (10) et maintenant l'écartement entre le médaillon (20) et le cadre (10) constant.

6. Pièce selon la revendication 5, **caractérisée en ce que** la zone de retenue (331) porte des trous de retenue (333) que les pattes de fixation (21) traversent avant de s'engager dans les orifices de fixation (12).

7. Pièce selon l'une quelconque des revendications précédentes, **caractérisée en ce que** le revêtement (33) est un tissu non déchirable, du type à chaîne et trame ou jersey.

8. Pièce selon l'une quelconque des revendications précédentes, **caractérisée en ce que** la matière plastique formant la couche (32) est constituée de polypropylène chargé d'une matière élastique, par exemple de l'éthylène propylène diène (EPDM).

9. Pièce selon l'une quelconque des revendications précédentes, **caractérisée en ce que** l'ouverture (11) présente des bords inclinés (111) formant des avaloirs pour guider le déploiement du coussin gonflable (1).

10. Application de la pièce selon l'une quelconque des revendications précédentes à la constitution d'un garnissage de porte latérale de véhicule automobile dans laquelle est logé un coussin gonflable.

## Patentansprüche

1. Teil zur Innenverkleidung für ein Kraftfahrzeug mit Airbag (1), einen starren Rahmen (10) mit einer Öffnung (11) aufweisend, die sich vor dem Airbag (1) befindet, und eine Klappe (30), welche die Öffnung (11) verschließt, **dadurch gekennzeichnet, dass** es ein Medaillon (20) mit geschlossenem Umfang aufweist, welches die Öffnung (11) umgibt und starr auf dem Rahmen (10) befestigt ist, wobei die Klappe (30) mit dem Rahmen (10) durch einen peripheren Ansatz (31) verbunden ist, der zwischen dem Medaillon (20) und dem Rahmen (10) klemmt, wobei die Klappe (30) eine Kunststoffschicht (32) aufweist, die entsprechend elastisch ist und sich mindestens auf den peripheren Ansatz (31) erstreckt, und eine elastische Verkleidung (33), die über die Kunststoffschicht (32) geformt ist.

2. Teil nach Anspruch 1, **dadurch gekennzeichnet, dass** die Verkleidung (33) einen Haltebereich (331) aufweist, der nicht über die Kunststoffschicht (32) geformt ist und an einem festen Punkt wie zum Beispiel dem Rahmen (10) oder dem Medaillon (20) starr befestigt ist und eine Halterung für die Klappe (30) ausbildet, wenn sich der Airbag (1) aufbläst.

3. Teil nach Anspruch 2, **dadurch gekennzeichnet, dass** der Haltebereich (331) der Verkleidung (33) normalerweise mehrere Falten (332) ausbildet, die in einer Aufnahme (40) angeordnet sind, die zwischen dem Rahmen (10) und dem Medaillon (20) ausgebildet ist, wobei sich diese Falten entfalten, wenn sich der Airbag (1) aufbläst.

4. Teil nach Anspruch 2 oder 3, **dadurch gekennzeichnet, dass** der Haltebereich (331) in bezug auf einen Rand der Kunststoffschicht (32) übersteht, wobei dieser Bereich parallel zu diesem Rand länglich geformt ist.

5. Teil nach einem der vorhergehenden Ansprüche 2 bis 4, **dadurch gekennzeichnet, dass** das Medaillon (20) Befestigungslaschen (21) aufweist, die irreversibel in den Befestigungsöffnungen (12) des Rahmens (10) einrasten und den Abstand zwischen dem Medaillon (20) und dem Rahmen (10) konstant halten.

6. Teil nach Anspruch 5, **dadurch gekennzeichnet, dass** der Haltebereich (331) Halteöffnungen (333) hat, welche die Befestigungslaschen (21) durchqueren, bevor sie in den Befestigungsöffnungen (12) einrasten.

7. Teil nach einem der vorhergehenden Ansprüche, **dadurch gekennzeichnet, dass** die Verkleidung (33) ein unzerreißbares Gewebe ist in der Art von Kette und Schuss oder Jersey.

8. Teil nach einem der vorhergehenden Ansprüche, **dadurch gekennzeichnet, dass** der die Schicht (32) ausbildende Kunststoff aus Polypropylen besteht, das mit einem elastischen Material, zum Beispiel mit Ethylen-Propylen-Dien (EPDM), ausgerüstet ist.

9. Teil nach einem der vorhergehenden Ansprüche, **dadurch gekennzeichnet, dass** die Öffnung (11) geneigte Kanten (111) aufweist, die Führungen ausbilden, um die Entfaltung des Airbags (1) zu lenken.

10. Anwendung des Teils nach einem der vorhergehenden Ansprüche zur Ausbildung einer Verkleidung der Seitentür eines Kraftfahrzeugs, in der ein Airbag untergebracht ist.

## Claims

1. Inner trim part for motor vehicle equipped with an airbag (1), comprising a rigid frame (10) having an opening (11) located in front of the airbag (1) and a flap (30) covering the opening (11), **characterized in that** it comprises an inset (20) with closed contour surrounding the opening (11)) and rigidly attached to the frame (10), the flap (30) being joined to the frame (10) by a peripheral edge (31) gripped between the inset (20) and the frame (10), the flap (30) comprising a layer of plastic material (32) of suitable flexibility extending at least over the peripheral edge (31) and a flexible covering (33) moulded over the layer of plastic material (32).

2. Part as in claim 1, **characterized in that** the coating (33) comprises a retaining area (331) that is not moulded over the layer of plastic material (32) and is rigidly attached to a fixed point, for example the frame (19) or inset (20) forming a check strap for the flap (30) when the airbag (1) is inflated.

3. Part as in claim 2, **characterized in that** the retaining area (331) of the covering (33) normally forms several folds (332) arranged in a housing (40) formed between the frame (10) and the inset (20), these folds being deployed when the airbag (1) is inflated.

4. Part as in claim 2 or 3, **characterized in that** the retaining area (331) protrudes with respect to an edge of the layer of plastic material (32), this area having an elongate shape parallel to said edge.

5. Part as in any of claims 2 to 4, **characterized in that** the inset (20) comprises fixing lugs (21) engaged irreversibly in fixing orifices (12) of the frame (10) and maintaining a constant distance between the inset (20) and the frame (10).

6. Part as in claim 5, **characterized in that** the retaining area (331) carries retaining holes (333) through which the fixing lugs (21) pass before engaging in the fixing orifices (12).

7. Part as in any of the preceding claims, **characterized in that** the covering (33) is a tear-proof fabric of warp and weft type or knit type.

8. Part as in any of the preceding claims, **characterized in that** the plastic material forming layer (32) consists of polypropylene containing an elastic material, for example ethylene propylene diene (EPDM).

9. Part as in any of the preceding claims, **characterized in that** the opening (11) has slanted edges (111) forming channels to guide deployment of the airbag (1).

10. Application of the part as in any of the preceding claims towards forming a side door trim for a motor vehicle, in which an airbag is housed.
